# FASCICULE DE BREVET EUROPEEN

(11) **EP 2 890 583 B1**
(45) Date de publication et mention de la délivrance du brevet: **03.02.2016**
(21) Numéro de dépôt: 13756392.0
(22) Date de dépôt: 26.08.2013
(51) Int. Cl.: G06F 3/0482, B60K 37/06, G06F 3/0488, F21V 8/00, G06F 3/041, B60K 35/00

(54) **DISPOSITIF D'AFFICHAGE ÉQUIPÉ D'UN GUIDE DE LUMIÈRE**
ANZEIGEVORRICHTUNG MIT EINEM LICHTLEITER
DISPLAY DEVICE PROVIDED WITH A LIGHT GUIDE

(30) Priorité: 30.08.2012 FR 1258103
(43) Date de publication de la demande: 08.07.2015
(73) Titulaire: Delphi Technologies, Inc., Troy, MI 48007-5052 (US)
(72) Inventeur: MOLARD, Yannick, F-67130 Hersbach (FR); CORDIER, Emmanuel, F-67190 Grendelbruch (FR)
(74) Mandataire: Delphi France SAS
(86) Numéro de dépôt international: PCT/EP2013/067651
(87) Numéro de publication internationale: WO 2014/033096

(56) Documents cités:
- EP-A2- 1 291 229
- DE-A1- 10 141 601
- DE-A1-102008 048 448

## Description

### DOMAINE TECHNIQUE

La présente invention concerne un dispositif d'affichage notamment prévu pour être agencé dans l'habitacle d'un véhicule automobile.

### ARRIERE-PLAN TECHNOLOGIQUE DE L'INVENTION

La présente invention concerne plus particulièrement un dispositif d'affichage comportant un boîtier dans lequel est agencé un écran d'affichage et comportant des boutons de commande tels que ceux qui sont agencés sur le tableau de bord d'un véhicule automobile. L'écran d'affichage est par exemple un écran à cristaux liquides, de forme rectangulaire. Un exemple de dispositif d'affichage comportant toutes les caractéristiques du preambule de la revendication 1 est divulgué dans le document DE102008048448A1. Les dimensions de l'écran d'affichage, en particulier la longueur de sa diagonale, ont une grande influence sur le coût du dispositif d'affichage. Plus la diagonale est grande, plus le coût du dispositif d'affichage est élevé.

La présente invention vise à proposer une solution qui permette d'étendre la zone d'affichage tout en minimisant les dimensions de l'écran d'affichage. Elle vise aussi à améliorer l'ergonomie du dispositif d'affichage de manière économique.

### RESUME DE L'INVENTION

Dans ce but, l'invention propose un dispositif d'affichage, notamment pour un véhicule automobile, comportant un boîtier dans lequel est agencé un écran d'affichage, en vis-à-vis d'une fenêtre d'affichage délimitée par un bord périphérique, caractérisé en ce que le boîtier est pourvu d'au moins un guide de lumière associé à au moins une source lumineuse, le guide de lumière comportant :
- une première portion qui est agencée à l'extérieur du bord périphérique et qui produit un faisceau latéral d'illumination à l'extérieur du bord périphérique, et
- une seconde portion qui s'étend dans le prolongement de la première portion, en vis-à-vis de la fenêtre d'affichage, et qui produit un faisceau auxiliaire d'illumination dans la fenêtre d'affichage.

Le dispositif d'affichage selon l'invention permet d'améliorer la qualité perçue et de simuler la présence d'un écran d'affichage plus grand que celui qui est effectivement monté dans le boîtier. Les guides de lumière permettent d'obtenir des effets de surface et des effets d'éclairage personnalisables en fonction des informations affichées sur l'écran ce qui améliore l'ergonomie du dispositif d'affichage.

La continuité du guide de lumière depuis la fenêtre latérale jusqu'à l'intérieur de la fenêtre d'affichage permet de produire un effet d'agrandissement de l'écran d'affichage sans augmenter le coût de la partie électronique de l'écran d'affichage. Cela permet aussi une grande variété d'effets lumineux qui contribuent à l'ergonomie du dispositif d'affichage.

L'agencement du guide de lumière selon l'invention permet aussi de produire un effet de profondeur dans la fonction d'affichage, simulant un affichage en trois dimensions, pour un coût modique. L'utilisateur peut ainsi repérer plus facilement les différentes fonctions sur l'écran.

Selon l'invention la seconde portion du guide de lumière s'étend entre la fenêtre d'affichage et l'écran d'affichage ;

Selon d'autres caractéristiques avantageuses de l'invention
- le guide de lumière est réalisé par moulage avec la paroi adjacente du boîtier ;
- le boîtier comporte une fenêtre latérale qui est séparée de la fenêtre d'affichage, et au moins une partie de la première portion du guide de lumière est agencée en vis-à-vis de la fenêtre latérale de manière à émettre le faisceau latéral d'illumination à travers la fenêtre latérale ;
- la fenêtre latérale possède une forme allongée qui s'étend sensiblement parallèlement au bord adjacent de la fenêtre d'affichage ;
- la fenêtre latérale comporte un dispositif de détection du toucher de manière à constituer un commutateur à commande tactile ;
- chaque portion du guide de lumière comporte des rugosités prévues pour produire le faisceau d'illumination correspondant ;
- l'épaisseur de la seconde portion du guide de lumière décroît progressivement en s'éloignant du bord périphérique ;
- une plaque à circuits imprimés est agencée dans le boîtier et la source lumineuse est constituée par une diode électroluminescente qui est montée sur la plaque à circuits imprimés ;
- la zone d'affichage de l'écran d'affichage est sensiblement égale à la surface de la fenêtre d'affichage, de sorte que le faisceau latéral d'illumination est émis en dehors de ladite zone d'affichage ;
- il est prévu au moins deux guides de lumière qui sont agencés de manière symétrique de chaque côté de l'écran d'affichage.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue de face qui représente schématiquement la face avant d'un dispositif d'affichage réalisé conformément aux enseignements de l'invention ;
- la figure 2 est une vue en coupe axiale selon le plan 2-2 qui représente schématiquement le dispositif d'affichage de la figure 1.

### DESCRIPTION DES MODES DE REALISATION PREFERES

Dans la suite de la description, des éléments similaires ou identiques pourront être désignés par les mêmes signes de référence.

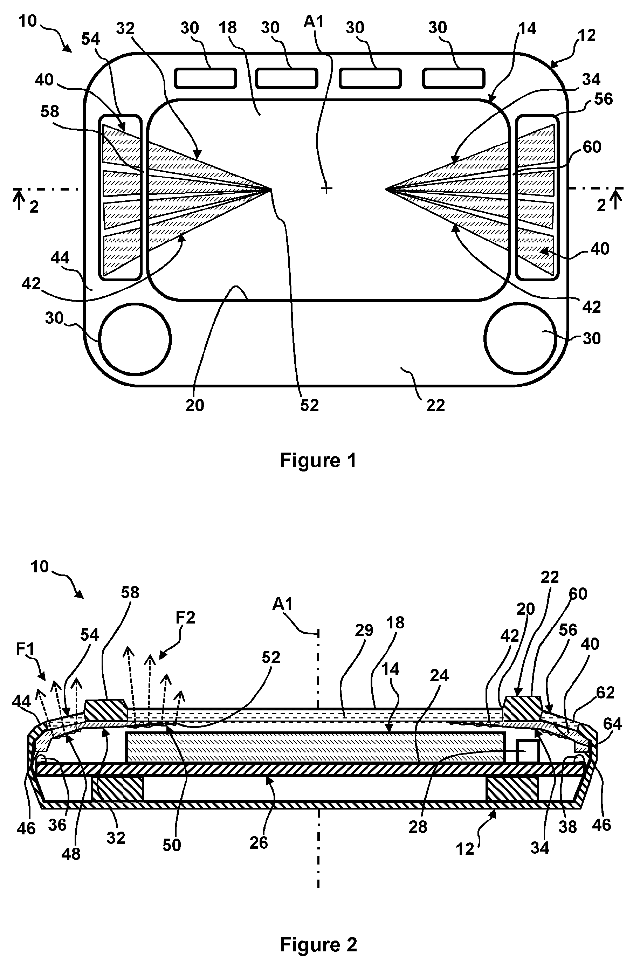

Sur les figures 1 et 2, on a représenté un dispositif d'affichage 10 prévu pour être agencé dans l'habitacle d'un véhicule automobile (non représenté). Le dispositif d'affichage 10 comporte un boîtier 12 dans lequel est agencé un écran d'affichage 14.

Dans la suite de la description, on utilisera à titre non limitatif une direction longitudinale A1 orientée de l'avant vers l'arrière qui correspond à une direction orthogonale à l'écran d'affichage 14 et qui correspond à une orientation du haut vers le bas en considérant la figure 2.

L'écran d'affichage 14 a ici la forme d'une dalle d'affichage globalement rectangulaire qui est agencée à l'intérieur du boîtier 12, en vis-à-vis et derrière une fenêtre d'affichage 18 délimitée par un bord périphérique 20 dans la face avant 22 du boîtier 12. L'écran d'affichage 14 est constitué par exemple par un afficheur à cristaux liquides ou à diodes électroluminescentes. Il est ici monté sur la face avant 24 d'une plaque à circuits imprimés 26 et contrôlée par une unité électronique de commande 28 agencée sur la plaque à circuits imprimés 26. L'écran d'affichage 14 possède une zone d'affichage, ou surface maximale d'affichage, qui correspond globalement à la surface de la fenêtre d'affichage 18. La fenêtre d'affichage 18 comprend de préférence une glace de protection 29. La glace de protection 29 ou l'écran d'affichage 14 peuvent être munis d'un dispositif de détection du toucher en vue de rendre l'écran d'affichage 14 tactile pour permettre de commander certaines fonctions de manière tactile.

Selon le mode de réalisation représenté, le boîtier 12 est pourvu de commutateurs 30 en vue de commander différentes fonctions du véhicule telles que la climatisation, l'autoradio, le système de navigation, etc. Les commutateurs 30 peuvent être constitués par des surfaces sensibles au toucher, ou surfaces tactiles, ou par des commutateurs à déclenchement mécanique.

Conformément aux enseignements de l'invention, le boîtier 12 est pourvu d'au moins un guide de lumière 32, 34 associé à au moins une source lumineuse 36, 38. Selon le mode de réalisation représenté ici, il comporte un premier guide de lumière 32 agencé sur le côté gauche de l'écran d'affichage 14, et un second guide de lumière 34 sur le côté droit de l'écran d'affichage 14, en considérant les figures 1 et 2.

Chaque guide de lumière 32, 34 comporte une première portion 40 qui est agencée à l'extérieur du bord périphérique 20 et qui produit un faisceau latéral d'illumination F1 à l'extérieur du bord périphérique 20, et une seconde portion 42 qui s'étend, dans le prolongement de la première portion 40, à l'intérieur du bord périphérique 20, et qui produit un faisceau auxiliaire d'illumination F2 dans la fenêtre d'affichage 18, au-dessus de l'écran d'affichage 14.

Chaque guide de lumière 32, 34 est réalisé sous la forme d'au moins un lame en matériau plastique translucide qui s'étend en partie contre la face interne de la paroi avant 44 du boîtier 12. De préférence, cette lame en matériau plastique translucide est réalisée par moulage, ou surmoulage, avec la paroi avant 44 du boîtier 12, par exemple en polycarbonate.

Chaque guide de lumière 32, 34 comporte au moins une surface d'entrée 46 de la lumière qui est agencée en vis-à-vis de la source lumineuse 36, 38 associée. La source lumineuse 36, 38 est ici une diode électroluminescente agencée sur la face avant 24 de la plaque à circuits imprimés 26. Bien entendu, le guide de lumière 32, 34 peut comporter plusieurs surfaces d'entrée 46 pour plusieurs sources lumineuses 36,38.

Pour produire les faisceaux d'illumination F1, F2, les guides de lumière 32, 34 sont munis d'éléments de diffusion lumineuse constitués par exemple par des rugosités 48, 50 agencées sur les parois de la première 40 et de la seconde 42 portions. Ces rugosités 48, 50 forment des micro-facettes de réfraction qui permettent à la lumière entrée dans le guide de lumière 32, 34 par la surface d'entrée 46 de sortir du guide de lumière 32, 34 en des emplacements déterminés situés sur la première 40 et la seconde 42 portions.

Avantageusement, l'épaisseur de la lame formant le guide de lumière 32, 34 diminue progressivement jusqu'à l'extrémité libre 52 de la seconde portion 42. La partie la plus épaisse est ici située au niveau de la surface d'entrée 46 et la partie la plus fine se situe à l'extrémité libre 52 de la seconde portion 42. La combinaison de la finesse de la seconde portion 42 et d'une répartition adaptée des rugosités 48, 50 sur la seconde portion 42 permettent d'obtenir un faisceau lumineux auxiliaire dont l'intensité lumineuse diminue progressivement en se rapprochant du centre de la fenêtre d'affichage 18 (en s'éloignant du bord périphérique 20).

Le boîtier 12 comporte ici une première 54 et une seconde 56 fenêtres latérales qui sont chacune séparées de la fenêtre d'affichage 18 par un montant latéral 58, 60 agencé le long d'une portion latérale du bord périphérique 20. La première portion 40 de chaque guide de lumière 32, 34 s'étend sous la fenêtre latérale 54, 56 correspondante de sorte que le faisceau latéral d'illumination F1 soit émis à travers ladite fenêtre latérale 54, 56.

Les fenêtres latérales 54, 56 comportent par exemple une glace latérale de protection 62 de type similaire à la glace de protection 29 agencée dans la fenêtre d'affichage 18. De préférence, chaque fenêtre latérale 54, 56 possède une forme allongée qui s'étend parallèlement au bord adjacent de la fenêtre d'affichage 18. Chaque fenêtre latérale 54, 56 comporte ici un dispositif de détection du toucher 64 de manière à constituer un commutateur à commande tactile. Ce dispositif de détection peut être constitué par un film translucide muni de capteurs résistifs ou capacitifs portés par la glace latérale de protection 62 associée. Les fenêtres latérales 54, 56 forment ainsi des surfaces tactiles de part et d'autre de la fenêtre d'affichage 18 et permettent par exemple à l'utilisateur de commander des curseurs affichés sur l'écran d'affichage 14, le long des montants 58, 60 associés en faisant glisser un doigt sur la fenêtre latérale 54, 56, le long du montant associé 58, 60.

Selon le mode de réalisation représenté, chaque guide de lumière 32, 34 comprend plusieurs bandes qui s'étendent transversalement depuis la fenêtre latérale 54, 56 jusqu'à se rejoindre en se rétrécissant dans la fenêtre d'affichage 18.

## Revendications

1. Dispositif d'affichage (10), notamment pour un véhicule automobile, comportant un boîtier (12) dans lequel est agencé un écran d'affichage (14), en vis-à-vis d'une fenêtre d'affichage (18) délimitée par un bord périphérique (20), le boîtier (12) étant pourvu d'au moins un guide de lumière (32, 34) associé à au moins une source lumineuse (36, 38), le guide de lumière (32, 34) comportant :
- une première portion (40) qui est agencée à l'extérieur du bord périphérique (20) et qui produit un faisceau latéral d'illumination (F1) à l'extérieur du bord périphérique (20), et
- une seconde portion (42) qui s'étend dans le prolongement de la première portion (40), en vis-à-vis de la fenêtre d'affichage (18), et qui produit un faisceau auxiliaire d'illumination (F2) dans la fenêtre d'affichage (18) **caractérisé en ce que**,
la seconde portion (42) du guide de lumière (32, 34) s'étend entre la fenêtre d'affichage (18) et l'écran d'affichage (14).

2. Dispositif d'affichage (10) selon la revendication précédente, **caractérisé en ce que** le guide de lumière (32, 34) est réalisé par moulage avec la paroi adjacente du boîtier (12).

3. Dispositif d'affichage (10) selon l'une quelconque des revendications précédentes, **caractérisé en ce que** le boîtier (12) comporte une fenêtre latérale (54, 56) qui est séparée de la fenêtre d'affichage (18), et **en ce qu'**au moins une partie de la première portion (40) du guide de lumière (32, 34) est agencée en vis-à-vis de la fenêtre latérale (54, 56) de manière à émettre le faisceau latéral d'illumination (F1) à travers la fenêtre latérale (54, 56).

4. Dispositif d'affichage (10) selon la revendication précédente, **caractérisé en ce que** la fenêtre latérale (54, 56) possède une forme allongée qui s'étend sensiblement parallèlement au bord adjacent de la fenêtre d'affichage (18).

5. Dispositif d'affichage (10) selon la revendication 3 ou 4, **caractérisé en ce que** la fenêtre latérale (54, 56) comporte un dispositif de détection du toucher (64) de manière à constituer un commutateur à commande tactile.

6. Dispositif d'affichage (10) selon l'une quelconque des revendications précédentes, **caractérisé en ce que** chaque portion (40, 42) du guide de lumière (32, 34) comporte des rugosités (48, 50) prévues pour produire le faisceau d'illumination (F1, F2) correspondant.

7. Dispositif d'affichage (10) selon l'une quelconque des revendications précédentes, **caractérisé en ce que** l'épaisseur de la seconde portion (42) du guide de lumière (32, 34) décroît progressivement en s'éloignant du bord périphérique (20).

8. Dispositif d'affichage (10) selon l'une quelconque des revendications précédentes, **caractérisé en ce qu'**une plaque à circuits imprimés (26) est agencée dans le boîtier (12) et **en ce que** la source lumineuse (36, 38) est constituée par une diode électroluminescente qui est montée sur la plaque à circuits imprimés (26).

9. Dispositif d'affichage (10) selon l'une quelconque des revendications précédentes, **caractérisé en ce que** la zone d'affichage de l'écran d'affichage (14) est sensiblement égale à la surface de la fenêtre d'affichage (18), de sorte que le faisceau latéral d'illumination (F1) est émis en dehors de ladite zone d'affichage.

10. Dispositif d'affichage (10) selon l'une quelconque des revendications précédentes, **caractérisé en ce qu'**il comporte au moins deux guides de lumière (32, 34) qui sont agencés de manière symétrique de chaque côté de l'écran d'affichage (14).

## Patentansprüche

1. Anzeigevorrichtung (10), insbesondere für ein Kraftfahrzeug, enthaltend ein Gehäuse (12), in dem ein Anzeigebildschirm (14) einem Anzeigefenster (18) gegenüberliegend angeordnet ist, das von einem Umfangsrand (20) eingegrenzt wird, wobei das Gehäuse (12) mit zumindest einem Lichtwellenleiter (32, 34) versehen ist, dem zumindest eine Lichtquelle (36, 38) zugeordnet ist, wobei der Lichtwellenleiter (32, 34) aufweist:
- einen ersten Abschnitt (40), der außerhalb des Umfangsrandes (20) angeordnet ist und einen seitlichen Beleuchtungsstrahl (F1) außerhalb des Umfangsrandes (20) erzeugt,
und
- einen zweiten Abschnitt (42), der sich in Verlängerung des ersten Abschnitts (40) dem Anzeigefenster (18) gegenüberliegend erstreckt und einen zusätzlichen Beleuchtungsstrahl (F2) im Anzeigefenster (18) erzeugt,
**dadurch gekennzeichnet, dass**
der zweite Abschnitt (42) des Lichtwellenleiters (32, 34) sich zwischen dem Anzeigefenster (18) und dem Anzeigebildschirm (14) erstreckt.

2. Anzeigevorrichtung (10) nach dem vorangehenden Anspruch, **dadurch gekennzeichnet, dass** der Lichtwellenleiter (32, 34) durch Formen mit der angrenzenden Wand des Gehäuses (12) ausgebildet ist.

3. Anzeigevorrichtung (10) nach einem der vorangehenden Ansprüche, **dadurch gekennzeichnet, dass** das Gehäuse (12) ein seitliches Fenster (54, 56) aufweist, das von dem Anzeigefenster (18) getrennt ist, und dass zumindest ein Teil des ersten Abschnitts (40) des Lichtwellenleiters (32, 34) dem seitlichen Fenster (54, 56) gegenüberliegend so angeordnet ist, dass er den seitlichen Beleuchtungsstrahl (F1) durch das seitliche Fenster (54, 56) hindurch emittiert.

4. Anzeigevorrichtung (10) nach dem vorangehenden Anspruch, **dadurch gekennzeichnet, dass** das seitliche Fenster (54, 56) eine längliche Form aufweist, die sich im Wesentlichen parallel zum angrenzenden Rand des Anzeigefensters (18) erstreckt.

5. Anzeigevorrichtung (10) nach Anspruch 3 oder 4, **dadurch gekennzeichnet, dass** das seitliche Fenster (54, 56) eine Detektionsvorrichtung (64) zum Detektieren einer Berührung aufweist, so dass es einen Schalter mit berührungsempfindlicher Steuerung bildet.

6. Anzeigevorrichtung (10) nach einem der vorangehenden Ansprüche, **dadurch gekennzeichnet, dass** jeder Abschnitt (40, 42) des Lichtwellenleiters (32, 34) Unebenheiten (48, 50) aufweist, die dazu vorgesehen sind, den entsprechenden Beleuchtungsstrahl (F1, F2) zu erzeugen.

7. Anzeigevorrichtung (10) nach einem der vorangehenden Ansprüche, **dadurch gekennzeichnet, dass** die Dicke des zweiten Abschnitts (42) des Lichtwellenleiters (32, 34) vom Umfangsrand (20) weg progressiv abnimmt.

8. Anzeigevorrichtung (10) nach einem der vorangehenden Ansprüche, **dadurch gekennzeichnet, dass** eine gedruckte Leiterplatte (26) in dem Gehäuse (12) angeordnet ist und dass die Lichtquelle (36, 38) aus einer Leuchtdiode besteht, die an der gedruckten Leiterplatte (26) angebracht ist.

9. Anzeigevorrichtung (10) nach einem der vorangehenden Ansprüche, **dadurch gekennzeichnet, dass** der Anzeigebereich des Anzeigebildschirms (14) im Wesentlichen gleich der Fläche des Anzeigefensters (18) ist, so dass der seitliche Beleuchtungsstrahl (F1) außerhalb des Anzeigebereichs emittiert wird.

10. Anzeigevorrichtung (10) nach einem der vorangehenden Ansprüche, **dadurch gekennzeichnet, dass** sie zumindest zwei Lichtwellenleiter (32, 34) aufweist, die auf jeder Seite des Anzeigebildschirms (14) symmetrisch zueinander angeordnet sind.

## Claims

1. Display device (10), notably for a motor vehicle, comprising a case (12) in which is arranged a display screen (14), facing a display window (18) delimited by a peripheral edge (20), the case (12) being provided with at least one light guide (32, 34) associated with at least one light source (36, 38), the light guide (32, 34) comprising:
- a first portion (40) which is arranged outside the peripheral edge (20) and which produces a lateral illumination beam (F1) outside the peripheral edge (20), and
- a second portion (42) which extends in the extension of the first portion (40), facing the display window (18), and which produces an auxiliary illumination beam (F2) in the display window (18), **characterized in that**,
the second portion (42) of the light guide (32, 34) extends between the display window (18) and the display screen (14).

2. Display device (10) according to the preceding claim, **characterized in that** the light guide (32, 34) is produced by moulding with the adjacent wall of the case (12).

3. Display device (10) according to any one of the preceding claims, **characterized in that** the case (12) comprises a lateral window (54, 56) which is separated from the display window (18), and **in that** at least a part of the first portion (40) of the light guide (32, 34) is arranged facing the lateral window (54, 56) so as to emit the lateral illumination beam (F1) through the lateral window (54, 56).

4. Display device (10) according to the preceding claim, **characterized in that** the lateral window (54, 56) has an elongate form which extends substantially parallel to the adjacent edge of the display window (18).

5. Display device (10) according to Claim 3 or 4, **characterized in that** the lateral window (54, 56) comprises a touch detection device (64) so as to constitute a touch control switch.

6. Display device (10) according to any one of the preceding claims, **characterized in that** each portion (40, 42) of the light guide (32, 34) comprises roughnesses (48, 50) provided to produce the corresponding illumination beam (F1, F2).

7. Display device (10) according to any one of the preceding claims, **characterized in that** the thickness of the second portion (42) of the light guide (32, 34) decreases progressively with distance from the peripheral edge (20).

8. Display device (10) according to any one of the preceding claims, **characterized in that** a printed circuit board (26) is arranged in the case (12) and **in that** the light source (36, 38) is formed by a light-emitting diode which is mounted on the printed circuit board (26).

9. Display device (10) according to any one of the preceding claims, **characterized in that** the display area of the display screen (14) is substantially equal to the surface area of the display screen (18), such that the lateral illumination beam (F1) is emitted outside of said display area.

10. Display device (10) according to any one of the preceding claims, **characterized in that** it comprises at least two light guides (32, 34) which are arranged symmetrically on either side of the display screen (14).
